## Europäisches Patentamt

## European Patent Office

## Office européen des brevets

(19)

(11) **EP 1 012 210 B1**

(12) **EUROPÄISCHE PATENTSCHRIFT**

(45) Veröffentlichungstag und Bekanntmachung des Hinweises auf die Patenterteilung:
**29.01.2003 Patentblatt 2003/05**

(21) Anmeldenummer: **98942368.6**

(22) Anmeldetag: **01.09.1998**

(51) Int Cl.⁷: **C09B 49/00**, D06P 1/30

(86) Internationale Anmeldenummer:
**PCT/AT98/00207**

(87) Internationale Veröffentlichungsnummer:
**WO 99/011716 (11.03.1999 Gazette 1999/10)**

(54) **VERFAHREN ZUR REDUKTION VON SCHWEFELFARBSTOFFEN**

PROCESS FOR REDUCING SULPHIDE DYESTUFFS

PROCEDE POUR LA REDUCTION DE COLORANTS AU SOUFRE

(84) Benannte Vertragsstaaten:
**AT BE DE ES FR GB GR IT PT**

(30) Priorität: **04.09.1997 AT 147897**

(43) Veröffentlichungstag der Anmeldung:
**28.06.2000 Patentblatt 2000/26**

(73) Patentinhaber: **DyStar Textilfarben GmbH & Co. Deutschland KG**
**65926 Frankfurt am Main (DE)**

(72) Erfinder:
• **BECHTOLD, Thomas**
  **A-6850 Dornbirn (AT)**
• **BURTSCHER, Eduard**
  **A-6700 Bludenz (AT)**

(56) Entgegenhaltungen:
**WO-A-90/15182          DE-A- 1 906 083**

**Beschreibung**

Unter der Gruppe der Schwefelfarbstoffe faßt man Farbstoffe des gleichen Herstellungsprinzips und der gleichen Färbeweise zusammen. Die Schwefelfarbstoffe entstehen durch Umsetzung geeigneter organischer Substanzen mit Schwefel, Alkalisulfiden oder Alkalipolysulfiden. Die entstehenden Produkte enthalten sich wiederholende organische Strukturelemente, die über Disulfidgruppen miteinander verbunden sind. Die chemische Konstitution ist in den meisten Fällen nicht mit Sicherheit bekannt.

Zum Zweck des Färbens werden die Schwefelfarbstoffe unter Anwendung unterschiedlicher Reduktionsverfahren reduziert. Dabei wird ein Teil der Disulfidbrücken reduktiv gespalten (Gleichung 1), die entstehenden Produkte besitzen niedrigere molare Massen, sind in wäßriger alkalischer Lösung löslich und können zum Zwecke des Färbens eingesetzt werden, da sie auch eine Affinität zu Fasern, z.B. Cellulosefasern, aufweisen.

$$(1) \qquad R\text{-}S\text{-}S\text{-}R + 2e^- \leftrightarrow R\text{-}S^- + R\text{-}S^-$$

(R = organischer Rest)

Da beim Färbeprozeß das den reduzierten Farbstoff enthaltende Färbebad gegen unerwünschte Oxidation des Farbstoffs durch Luft geschützt werden muß, werden stets Reduktionschemikalien zusätzlich ins Färbebad gegeben. Soll sowohl die Reduktion des Farbstoffs wie auch die Vermeidung der Luftoxidation durch Zugabe von Reduktionschemikalien erreicht werden, so sind hierzu sehr große Mengen an Reduktionsmitteln erforderlich, welche entsprechende Kosten beim Färbeprozeß wie auch bei der Beseitigung des aus der Anwendung entstehenden Färbereiabwassers verursachen. Eine teilweise Verbesserung wird beim Verfahren nach DE-OS 1 906 083 erreicht, welches die Farbstoffreduktion mit Hilfe der kathodischen Reduktion in wäßriger Lösung bei Stromdichten zwischen 5 mA.cm$^{-2}$ und 50 mA.cm$^{-2}$ empfiehlt.

Vermutlich aufgrund der angewendeten hohen Stromdichte muß das bekannte Verfahren wegen Wasserstoffentwicklung abgebrochen werden, wenn die Konzentration an Reduktionsäquivalenten in der Lösung irgendwo im Bereich von 70 - 150 Ah.kg$^{-1}$ liegt. Die Lösung wäre damit zwar bereits verwendbar, würde jedoch durch den beim Färbeprozess hinzutretenden Saurstoff teilweise oxidiert. Zur Stabilisierung wird daher dem elektrochemisch reduzierten Farbstoff ein chemisches Reduktionsmittel beigegeben, das insgesamt etwa die Hälfte des gesamten Reduktionsäquivalents ausmacht. Während somit beim Verfahren nach DE-OS 1 906 083 immerhin etwa die Hälfte der chemischen Reduktionsmittel eingespart werden kann, ist dieses Verfahren bei den im Handel erhältlichen vorreduzierten Schwefelfarbstoffen, welche üblicherweise in der Färbelösung mit weiteren stabilisierenden Reduktionsmitteln versetzt werden, nicht anwendbar. Bei dem durch die Vorreduktion erzielten Gehalt an Reduktionsäquivalenten würde unverzüglich Wasserstoffentwicklung auftreten.

Während die genannte Vorveröffentlichung mit Verfahrenszeiten von mehreren Stunden rechnet und daher zur Verringerung dieser Zeit auf eine mögliche Erhöhung der angewendeten Stromstärken verweist, liegt der Erfindung die überraschende Erkenntnis zugrunde, daß durch eine wesentliche Verringerung der Stromdichte an den Kathoden die elektrochemische Reduktion so weit fortgesetzt werden kann, daß auch nach der Oxidation durch den beim Färbeprozeß hinzutretenden Sauerstoff der Farbstoff noch hinreichend reduziert ist.

Die Erfindung bezieht sich somit auf ein Verfahren zur Reduktion von Schwefelfarbstoffen bis zu einer in der Lösung analytisch feststellbaren Konzentration an Reduktionsäquivalenten von mindestens 150 Ah/kg bezogen auf den festen Farbstoff, wobei mindestens 50 Ah/kg durch kathodische Reduktion elektrochemisch eingebracht werden, dadurch gekennzeichnet, dass bei einer Farbstoffkonzentration im Katholyt von 100 g/l festen Farbstoffs und bei einer über 150 Ah/kg liegenden Konzentration an Reduktionsäquivalenten die kathodische Reduktion bei einer Stromdichte von 0.5 mA/cm$^2$ bis 5 mA/cm$^2$ erfolgt.

Das bekannte Verfahren wird dadurch verbessert, daß bei einer über 150 Ah.kg$^{-1}$ liegenden Konzentration an Reduktionsäquivalenten kathodische Reduktion erfolgt. Die Feststellung der äquivalenten Reduktionsmittelmenge kann über potentiometrische Titration des Elektrolyten mit Jodlösung und Umrechnung über das Faraday'sche Gesetz erfolgen. Auch durch Messung der geflossenen Ladungsmenge läßt sich die nach der Elektrolyse im Katholyten vorhandene Reduktionsmittelmenge bestimmen.

Bei Schwefelschwarz (Diresul 4G-EV fl., Sulfur Black 1, Colour Index 53185), einem typischen Vertreter der Klasse der Schwefelfarbstoffe, liegt dieser Wert bei mindestens 180 Ah.kg$^{-1}$ festen Farbstoff. Liegen die Farbstoffe bereits in reduzierter Form vor, was z.B. durch chemische Zusätze bei der Herstellung des Produkts erreicht werden kann, so verringert sich die erforderliche Ladungsmenge, die zusätzlich durch kathodische Reduktion eingebracht werden muß, entsprechend. Jeder Durchschnittsfachmann ist in der Lage, aus der analytischen Untersuchung des Zustands des Ausgangsfarbstoffes den bereits vorliegenden Reduktionsgrad zu bestimmen und daraus die durch kathodische Reduktion noch zu erzeugende Reduktionsäquivalente so berechnen, daß insgesamt Reduktionsmitteläquivalente von mindestens 180 Ah.kg$^{-1}$ festen Farbstoff im Bad vorliegen. Bei der Berechnung muß auch die Konzentration an Farbstoff im technischen Produkt berücksichtigt werden, da zahlreiche technische Handelsprodukte durch Stellmittel (z.B. Salze, Dispergiermittel) oder bei der Herstellung flüssiger Produkte entsprechend der Zubereitung nur einen bestimmten Massenanteil an festem Farbstoff enthalten.

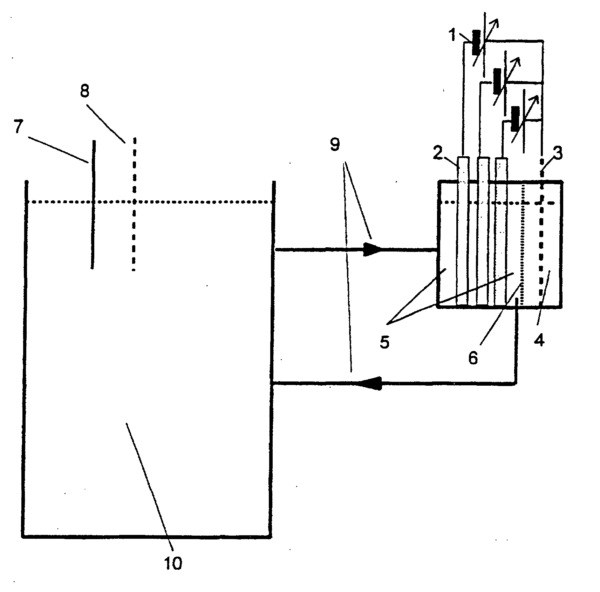

In der Zeichnung ist eine Einrichtung zur Durchführung des erfindungsgemäßen Verfahrens schematisch dargestellt. Da derartige Einrichtungen bekannt sind (vgl. AT 402 946 B), reicht eine kurze Beschreibung derselben aus.

In der Zeichnung sind mit 1 die Stromversorgungen, mit 2 die Kathoden, mit 3 die Anode bezeichnet. Wesentlich ist die Verwendung der Kationenaustauscher-Membran 6, welche Anolyt 4 und Katholyt 5 trennt. Der Fühler 7 dient zur Potentialmessung in der Farbstofflösung, der Fühler 8 zur Temperaturmessung. Der Behälter 10 bildet das Katholytreservoir, in welchem auch der Färbevorgang ablaufen kann. Reduziert wird der Katholyt durch die Zirkulation im Kreislauf 9.

Anschließend werden zwei Anwendungsbeispiele beschrieben, welche mit der dargestellten Einrichtung durchgeführt wurden.

Anwendungsbeispiel 1

In einer durch eine Kationenaustauscher-Membran geteilten Mehrkathodenzelle nach AT-Patent 402.946 wird eine Dispersion von 200 ml.l$^{-1}$ Diresul 4G-EV fl. (ca. 40-50% ige Dispersion von Sulfur Black 1, Colour Index 53185), 4 ml.l$^{-1}$ Natronlauge 50%ig, und 2 ml.l$^{-1}$ Netzmittel bei 40-50°C elektrolysiert. Als Anolyt wird Natronlauge (40 g.l$^{-1}$ NaOH) verwendet. Die Elektrolyse wird 40 min bei einer kathodischen Stromdichte von 0.6-0,7 mA.cm$^{-2}$ elektrolysiert und anschließend 130 min bei einer Stromdichte von 1 mA.cm$^{-2}$ reduziert. Der nach der Elektrolyse durch Titration feststellbare Gehalt an Reduktionsäquivalenten ist dabei bei 0,83 mol.l$^{-1}$ angelangt, was einer Ladungsmenge von 222 Ah pro kg Farbstoff entspricht. Die so hergestellte Lösung kann ohne weitere Zusätze zu Färbezwecken verwendet werden.

Anwendungsbeispiel 2

Eine Lösung von 20 ml.l$^{-1}$ Diresul RDT fl. (ca. 40-50%ige Lösung von Leuco Sulfur Black 1) wird in Gegenwart von 20 g.l$^{-1}$ Na$_2$SO$_4$ wasserfrei bei pH 12 und Raumtemperatur in einer Anlage entsprechend Anwendungsbeispiel 1 elektrolysiert. Als Anolyt wird wiederum Natronlauge (40 g.l$^{-1}$ NaOH) verwendet. Die Lösung des reduzierten Farbstoffs weist am Beginn der Elektrolyse bei der jodometrischen Titration einen Gehalt an Reduktionsäquivalenten von 0,075 mol.l$^{-1}$ auf. Die kathodische Reduktion wird entsprechend dem niedrigen Gehalt an Farbstoff im Katholyt bei einer Stromdichte von 0,26 mA.cm$^{-2}$ durchgeführt. Die Elektrolyse wird bei einem analytisch festgestellten Gehalt von 0,125 mol. l$^{-1}$ beendet. Die Lösung enthält nun einen Gehalt an Reduktionsäquivalenten von 335 Ah bezogen auf 1 kg festen Farbstoff. Die so hergestellte Lösung des Farbstoffs kann direkt zum Färben verwendet werden.

Durch die beschriebene Erfindung ist es möglich, Schwefelfarbstoffe ohne jegliche Verwendung von chemischen Reduktionsmitteln so weit zu reduzieren, daß auch die beim Färbevorgang erfolgende Oxidation bereits berücksichtigt ist. Außerdem ermöglicht es erst die Erfindung, chemisch bereits vorreduzierte Schwefelfarbstoffe elektrochemisch noch weiter zu behandeln und dadurch die insgesamt benötigte Menge an Chemikalien zu verringern.

**Patentansprüche**

1. Verfahren zur Reduktion von Schwefelfarbstoffen bis zu einer in der Lösung analytisch feststellbaren Konzentration an Reduktionsäquivalenten von mindestens 150 Ah/kg bezogen auf den festen Farbstoff, wobei mindestens 50 Ah/kg durch kathodische Reduktion elektrochemisch eingebracht werden, **dadurch gekennzeichnet, dass** bei einer Farbstoffkonzentration im Katholyt von 100 g/l festen Farbstoffs und bei einer über 150 Ah/kg liegenden Konzentration an Reduktionsäquivalenten die kathodische Reduktion bei einer Stromdichte von 0.5 mA/cm$^2$ bis 5 mA/cm$^2$ erfolgt.

2. Verfahren nach Anspruch 1, **dadurch gekennzeichnet, daß** bei einer über 180 Ah.kg$^{-1}$ liegenden Konzentration kathodische Reduktion erfolgt.

3. Verfahren nach Anspruch 1, **dadurch gekennzeichnet, daß** mindestens 70% der Reduktionsäquivalente elektrochemisch eingebracht werden.

4. Verfahren nach Anspruch 1, **dadurch gekennzeichnet, daß** im wesentlichen die gesamten Reduktionsäquivalente elektrochemisch eingebracht werden.

5. Verfahren nach Anspruch 1, **dadurch gekennzeichnet, dass** die Stromdichte vorzugsweise zwischen 0,8 ma/cm$^2$ und 2 mA/cm$^2$ liegt.

6. Verfahren nach Anspruch 1 und 4, **dadurch gekennzeichnet, daß** die verwendete Elektrolysezelle eine dreidimensionale Elektrode als Kathode enthält.

7. Verfahren nach den Ansprüchen 1 bis 5, **dadurch gekennzeichnet, daß** die verwendete Elektrolysezelle mehrere Kathoden enthält, die auf unterschiedlichem Potential gegenüber einer gemeinsamen Anode betrieben werden.

8. Verfahren nach den Ansprüchen 1 bis 7, **dadurch gekennzeichnet, daß** der Katholyt zwischen 10 g. l$^{-1}$ und 500 g.l$^{-1}$ Farbstoff enthält.

**9.** Verfahren nach Ansprüchen 1 bis 8, **dadurch gekennzeichnet, daß** als Grundelektrolyt eine Lösung eines Alkalisalzes oder eines Alkalihydroxids verwendet wird.

## Claims

**1.** A process for reducing sulphur dyes to an analytically determinable concentration of reduction equivalents in the solution of at least 150 Ah/kg with respect to the solid dye, with at least 50 Ah/kg being introduced electrochemically by cathodic reduction, **characterized in that** for a dye concentration in the catholyte of 100 g/l of solid dye and a concentration of reduction equivalents of more than 150 Ah/kg the cathodic reduction is effected at a current density of from 0.5 mA/cm$^2$ to 5 mA/cm$^2$.

**2.** Process according to Claim 1, **characterized in that** cathodic reduction is effected for a concentration of more than 180 Ah.kg$^{-1}$.

**3.** Process according to Claim 1, **characterized in that** at least 70% of the reduction equivalents are introduced electrochemically.

**4.** Process according to Claim 1, **characterized in that** substantially all of the reduction equivalents are introduced electrochemically.

**5.** Process according to Claim 1, **characterized in that** the current density is preferably between 0.8 mA/cm$^2$ and 2 mA/cm$^2$.

**6.** Process according to Claims 1 and 4, **characterized in that** the electrolysis cell used comprises a three-dimensional electrode as the cathode.

**7.** Process according to Claims 1 to 5, **characterized in that** the electrolysis cell used comprises two or more cathodes which are operated at a potential different to that of a common anode.

**8.** Process according to Claims 1 to 7, **characterized in that** the catholyte contains between 10 g.l$^{-1}$ and 500 g.l$^{-1}$ of dye.

**9.** Process according to Claims 1 to 8, **characterized in that** a solution of an alkali metal salt or of an alkali metal hydroxide is used as base electrolyte.

## Revendications

**1.** Procédé pour la réduction de colorants soufrés jusqu'à une concentration d'équivalents de réduction, pouvant être déterminée par analyse dans la solution, d'au moins 150 Ah/kg, par rapport au colorant solide, au moins 50 Ah/kg étant introduits électrochimiquement par réduction cathodique, **caractérisé en ce que**, à une concentration de colorant dans le catholyte de 100 g/l de colorant solide et à une concentration d'équivalents de réduction supérieure à 150 Ah/kg, la réduction cathodique s'effectue à une densité de courant de 0,5 mA/cm$^2$ à 5 mA/cm$^2$.

**2.** Procédé selon la revendication 1, **caractérisé en ce que** la réduction cathodique s'effectue à une concentration supérieure à 180 Ah.kg$^{-1}$.

**3.** Procédé selon la revendication 1, **caractérisé en ce qu'**au moins 70 % des équivalents de réduction sont introduits électrochimiquement.

**4.** Procédé selon la revendication 1, **caractérisé en ce que** pratiquement la totalité des équivalents de réduction sont introduits électrochimiquement.

**5.** Procédé selon la revendication 1, **caractérisé en ce que** la densité de courant est de préférence comprise entre 0,8 mA/cm$^2$ et 2 mA/cm$^2$.

**6.** Procédé selon les revendications 1 et 4, **caractérisé en ce que** la cellule électrolytique utilisée contient une électrode tridimensionnelle en tant que cathode.

**7.** Procédé selon les revendications 1 à 5, **caractérisé en ce que** la cellule électrolytique utilisée contient plusieurs cathodes qui sont utilisées à un potentiel différent par rapport à une anode commune.

**8.** Procédé selon les revendications 1 à 7, **caractérisé en ce que** le catholyte contient entre 10 g.l$^{-1}$ et 500 g.l$^{-1}$ de colorant.

**9.** Procédé selon les revendications 1 à 8, **caractérisé en ce qu'**on utilise comme électrolyte de base une solution d'un sel de métal alcalin ou un hydroxyde de métal alcalin.